**Europäisches Patentamt**

**European Patent Office**

**Office européen des brevets**

(11) Veröffentlichungsnummer: **0 269 557**
**A1**

## (12) EUROPÄISCHE PATENTANMELDUNG

(21) Anmeldenummer: 87730153.1

(22) Anmeldetag: 20.11.87

(51) Int. Cl.⁴: **F 16 H 55/30**

(30) Priorität: 21.11.86 DE 3639784

(43) Veröffentlichungstag der Anmeldung:
01.06.88 Patentblatt 88/22

(84) Benannte Vertragsstaaten: **AT DE FR GB IT**

(71) Anmelder: **RUD-Kettenfabrik Rieger & Dietz GmbH u. Co.**
**Friedensinsel**
**D-7080 Aalen 1 (DE)**

(72) Erfinder: **Dalferth, Hans**
**Eifelstrasse 21**
**D-7080 Aalen-Wasseralfingen (DE)**

(74) Vertreter: **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

(54) **Kettenrad mit Taschen.**

(57) Bei einem Kettenrad mit Taschen (3) zur Aufnahme von Horizontalgliedern (4) einer Rundstahlkette finden Zähne (2) Verwendung, an deren Zahnfußrundungen (6) sich Schrägflächen (7) anschließen, die zur Abstützung der Horizontalglieder (4) von Ketten dienen, deren Teilung größer als die Teilung des Kettenrades ist. Auf eine herkömmliche Abstützung der Horizontalglieder auf planen Böden (8) der Taschen (3) wird bewußt verzichtet.

Fig.1

EP 0 269 557 A1

**Beschreibung**

"Kettenrad mit Taschen"

Die Erfindung betrifft ein Kettenrad mit zur Aufnahme der Horizontalglieder einer Rundstahlkette dienenden Taschen, die die Horizontalglieder nur partiell abstützen und von jeweils vier Zähnen gebildet werden, deren Flanken einen konvexen Kopfteil und einen sich hieran anschließenden konkaven Fußteil mit einer Zahnfußrundung aufweisen, deren Krümmungsradius im wesentlichen gleich der halben Dicke der Kettenglieder ist, sowie mit einer zur Aufnahme der Vertikalglieder dienenden, die Taschen in jeweils zwei Hälften unterteilenden umlaufenden Rille.

Bei bekannten Kettenrädern der vorstehenden Art gehen die auch als Zahnfußradien bezeichneten, an die Kontur der Kettenglieder angepaßten Rundungen der Zahnfüße unmittelbar in den Taschenboden über, der eine im Bereich der Gliedschenkel mit einer Ausnehmung versehene, im wesentlichen plane Auflagefläche zumindest für die torischen Teile der Horizontalglieder bildet (DIN Vorlage 00 15 125, DE-OS 31 15 927). Die Auflagenflächen formen bei den bekannten Kettenrädern mit anderen Worten Tangentialebenen an einen gedachten Zylinder, dessen Längsachse mit der Drehachse des Kettenrades zusammenfällt.

Untersuchungen haben gezeigt, daß die bekannte Art der Abstützung nicht unproblematisch ist. Es bilden sich nämlich infolge Reibungsverschleißes durch Relativbewegungen zwischen dem Kettenrad und den einlaufenden Horizontalgliedern im sich an die Zahnfußrundungen anschließenden Bereich der Taschenböden Verschleißmulden. Diese Verschleißmulden stellen zwar keine ernste Gefahr für die Kettenräder dar, wohl aber für die Horizontalglieder. Der Grund hierfür ist darin zu erblicken, daß die Vertikalglieder die im Bereich der Verschleißmulden gelegenen Teile der Horizontalglieder in die Verschleißmulden zu drücken suchen. Dabei bil det der der Taschenbodenmitte zugewandte Rand der Verschleißmulden eine Art Kippkante, die zu Biegebeanspruchungen der Horizontalglieder führt, welche insbesondere bei höheren Lasten Brüche verursachen können.

Der Erfindung liegt die Aufgabe zugrunde, unter Ausnutzung der vorstehenden Erkenntnisse ein Kettenrad zu schaffen, das eine bessere, d.h. die Bruchgefahr reduzierende Führung der Horizontalglieder ermöglicht. Diese Aufgabe wird erfindungsgemäß dadurch gelöst, daß sich bei einem Kettenrad der gattungsgemäßen Art an die unteren Enden der Zahnfußrundungen der in Umfangsrichtung des Kettenrades aufeinanderfolgenden Zähne einer jeden Kettentasche zum Radinnern abfallende, einen Winkel zueinander einnehmende Schrägflächen anschließen.

Das erfindungsgemäße Kettenrad bietet den Vorteil, daß die von ihm geführten Horizontalglieder keinen Biegebelastungen der eingangs geschilderten Art ausgesetzt sind. Das Vorsehen von Schrägflächen und der hiermit verbundene bewußte Verzicht auf die allgemein als notwendig erachtete Abstützung der Horizontalglieder durch plane Teile des Taschenbodens ist nicht mit negativen Folgen verbunden. Er eröffnet im Gegenteil die Möglichkeit einer besonders wirtschaftlichen Fertigung der Kettenräder, bei der man deren die Kettentaschen bildenden Zähne durch Schweißen mit dem Grundkörper des Kettenrades verbindet. Die Schrägflächen gestatten es nämlich, gleiche Zähne für Kettenräder unterschiedlicher Teilung zu verwenden und auf diese Weise auch die Lagerhaltungskosten zu vermindern. Unabhängig von der Art der Herstellung erfindungsgemäßer Kettenräder erweisen sich diese als gegenüber herkömmlichen Kettenrädern weniger verschleißempfindlich.

Weitere Einzelheiten und Merkmale der Erfindung ergeben sich aus den Unteransprüchen und der nachstehenden Beschreibung mehrerer in der beigefügten Zeichnung dargestellter vorteilhafter Ausführungsbeispiele. Es zeigen:

Fig. 1 einen Schnitt durch einen Teil eines ersten Kettenrades bei übereinstimmender Teilung von Kettenrad und Kette,

Fig. 2 einen Schnitt durch einen Teil eines zweiten Kettenrades bei ebenfalls übereinstimmender Teilung von Kettenrad und Kette,

Fig. 3 einen der Fig. 2 entsprechenden Schnitt bei gegenüber der Kettenradteilung vergrößerter Kettenteilung,

Fig. 4 einen Schnitt durch einen Teil eines dritten Kettenrades mit kleiner Teilung und aufgeschweißten Zähnen,

Fig. 5 einen Schnitt durch einen Teil eines Kettenrades mit größerer Teilung und ebenfalls aufgeschweißten Zähnen,

Fig. 6 einen Schnitt längs der Linie VI-VI in Fig. 4,

Fig. 7 einen Schnitt durch ein weiteres Kettenrad und

Fig. 8 einen Schnitt längs der Linie VIII-VIII in Fig. 7.

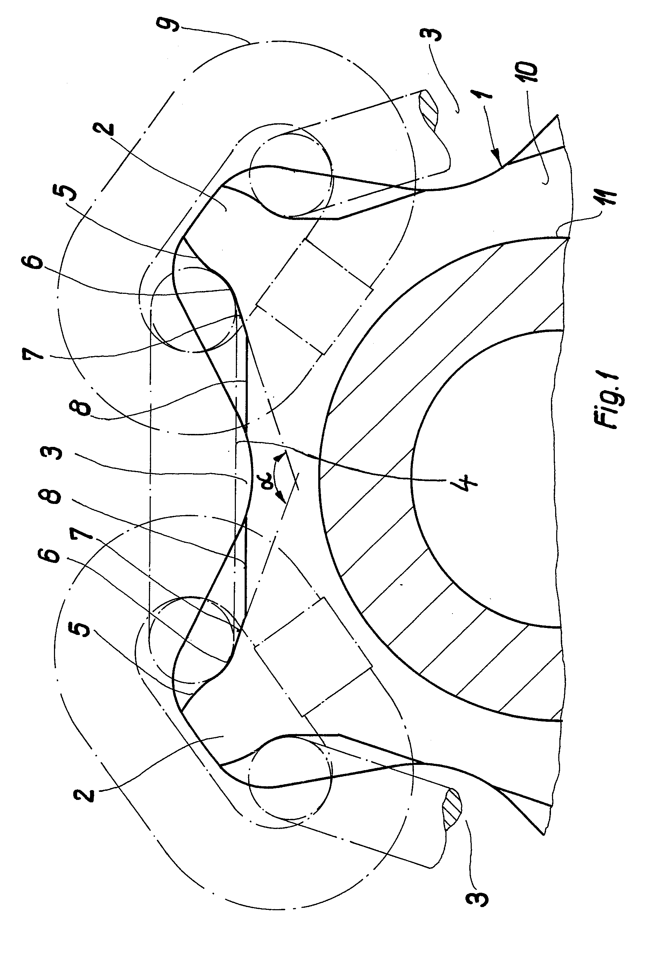

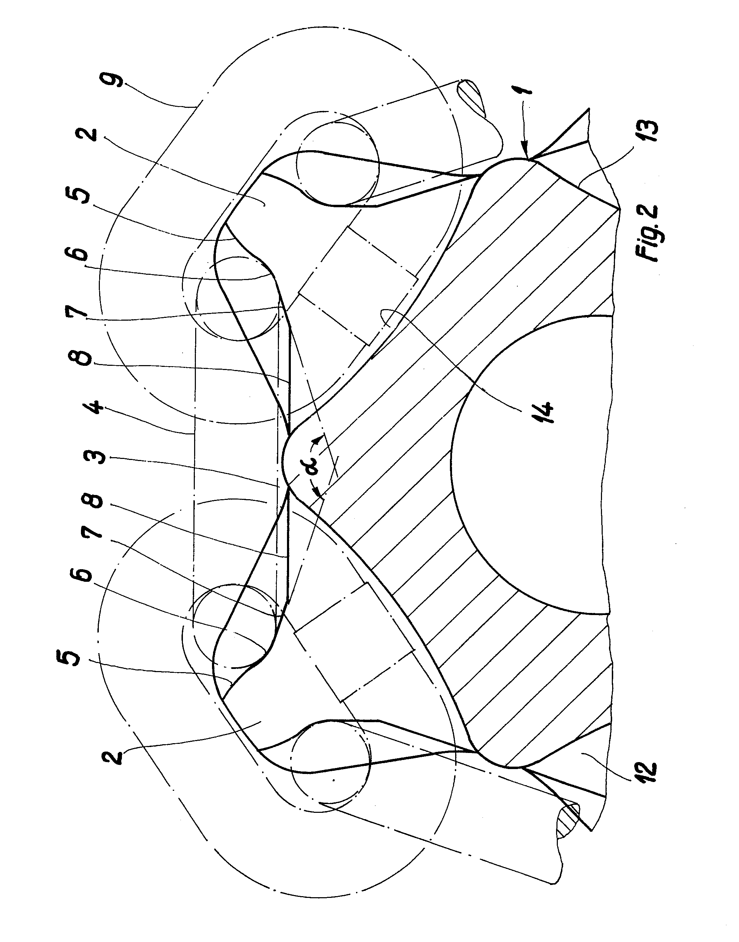

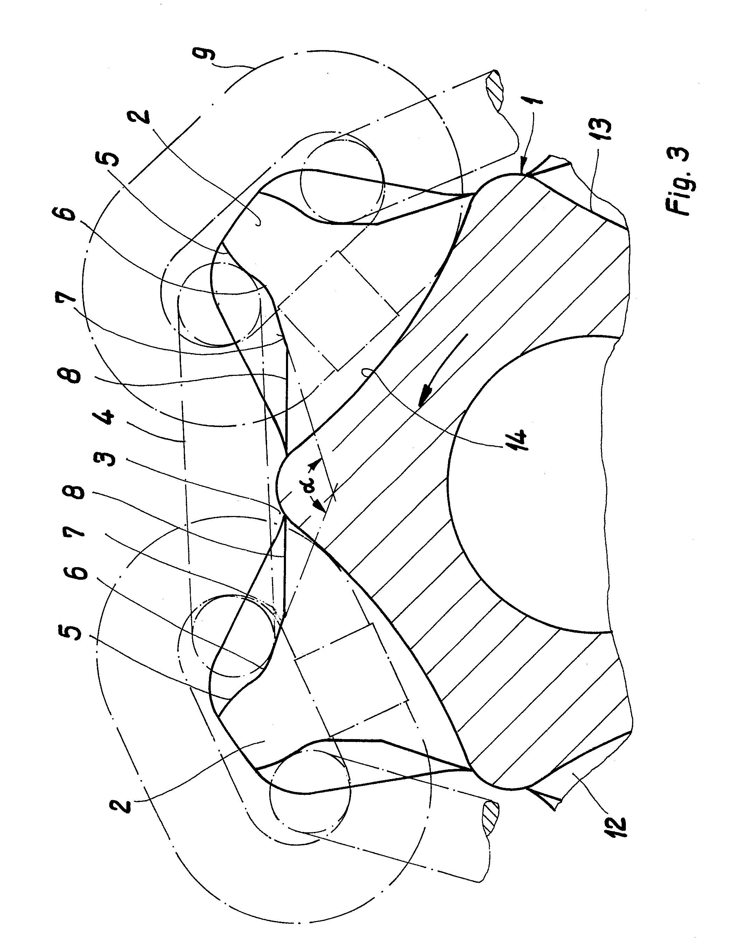

In Fig. 1 ist 1 der Grundkörper eines Kettenrades, über dessen Umfang mehrere von Zähnen 2 begrenzte Taschen für Horizontalglieder 4 verteilt sind. Die Zahnflanken 5 der Zähne 2 sind im Bereich ihres Kopfteiles konvex und im Bereich ihres Fußteiles konkav ausgebildet, sie weisen Zahnfußrundungen 6 auf, deren Krümmungsradius $r_1$ im wesentlichen gleich der halben Nenndicke d der Horizontalglieder 4 ist. An die Zahnfußrundungen 6 schliessen sich Schrägflächen 7 an, die in den jeweiligen Taschenboden 8 übergehen. Zumindest die sich an die Zahnfußrundungen 6 anschließenden Teile der Schrägflächen 7 aufeinenderfolgender Zähne 2 einer Tasche nehmen einen Winkel α zueinander ein. In der Zeichnung sind lediglich die hinteren Zähne 2 einer Tasche 3 gezeigt, da der Schnitt durch die Mitte der zur Aufnahme der Vertikalglieder 9 dienenden Rille 10 geführt ist, deren Grund im Falle der Fig. 1 kreisrund ist.

In Fig. 2 ist ein Kettenrad dargestellt, das weitgehend dem Kettenrad gemäß Fig. 1 entspricht.

Abweichend von der zuerst beschriebenen Konstruktion findet jedoch eine Rille 12 mit einem Grund 13 Verwendung, dessen Umfang im Bereich der Zähne 3 Stützmulden 14 für z.B. infolge verschleißbedingter Teilungsvergrößerung verkantete Vertikalglieder 9 bildet, wie dies weiter unten erläutert wird.

Die Fig. 1 zeigt ebenso wie die Fig. 2 die Soll-Lage der Horizontalglieder, die in der Praxis insbesondere aufgrund von Fertigungstoleranzen und/oder Verschleißerscheinungen so gut wie nie erreicht wird. In dieser Soll-Lage stützen sich die Buge der Horizontalglieder an den Zahnfußrundungen 6 ab, d.h. es findet regelmäßig weder zwischen dem Taschenboden und dem Horizontalglied 4 noch zwischen dem Grund 11 bzw. 13 der Rillem 10 bzw. 12 und dem Vertikalglied 9 eine Berührung statt.

Die Fig. 3 zeigt demgegenüber in zum besseren Verständnis etwas übertriebener Darstellung die Verhältnisse, wie sie sich in der Praxis einstellen. Aufgrund der gegenüber der Zahnteilung des Kettenrades größeren Teilung der Kette wandert der hintere Bug des vom rechten Zahn 2 angetriebenen Horizontalgliedes 4 während des Passierens des Kettenrades längs des Zahnflanke 5 nach oben, während der vordere Bug auf der linken Schrägfläche 7 geringfügig nach unten rutscht. Aufgrund der Neigung der Schrägfläche 7, gegen die der vordere Bug des Horizontalgliedes 4 sich abstützt, und aufgrund der Reibungs- und Kraftverhältnisse an den Abstützpunkten setzt die Rutschbewegung zu einem späteren Zeitpunkt ein als bei herkömmlichen Kettenrädern. Dies bedeutet, daß die Kräfte, die zwischen dem rutschenden Glied und dem Kettenrad auftreten, in der Rutschphase geringer sind und eine Verschleißminderung im Gefolge haben. Die Standzeit sowohl des Kettenrades als auch der Kette wird auf diese Weise erhöht.

Im Falle des Kettenrades gemäß den Fig. 2 und 3 wird eine weitere Entlastung des zur Übertragung der Umfangskraft genutzten Horizontalgliedes 4 dadurch erreicht, daß es zu einer Berührung zwischen dem Vertikalglied 9 und der vom Rillengrund 13 gebildeten Stützmulde 14 kommt. Auch dies wirkt sich positiv auf die Standzeit von Kettenrad und Kette aus.

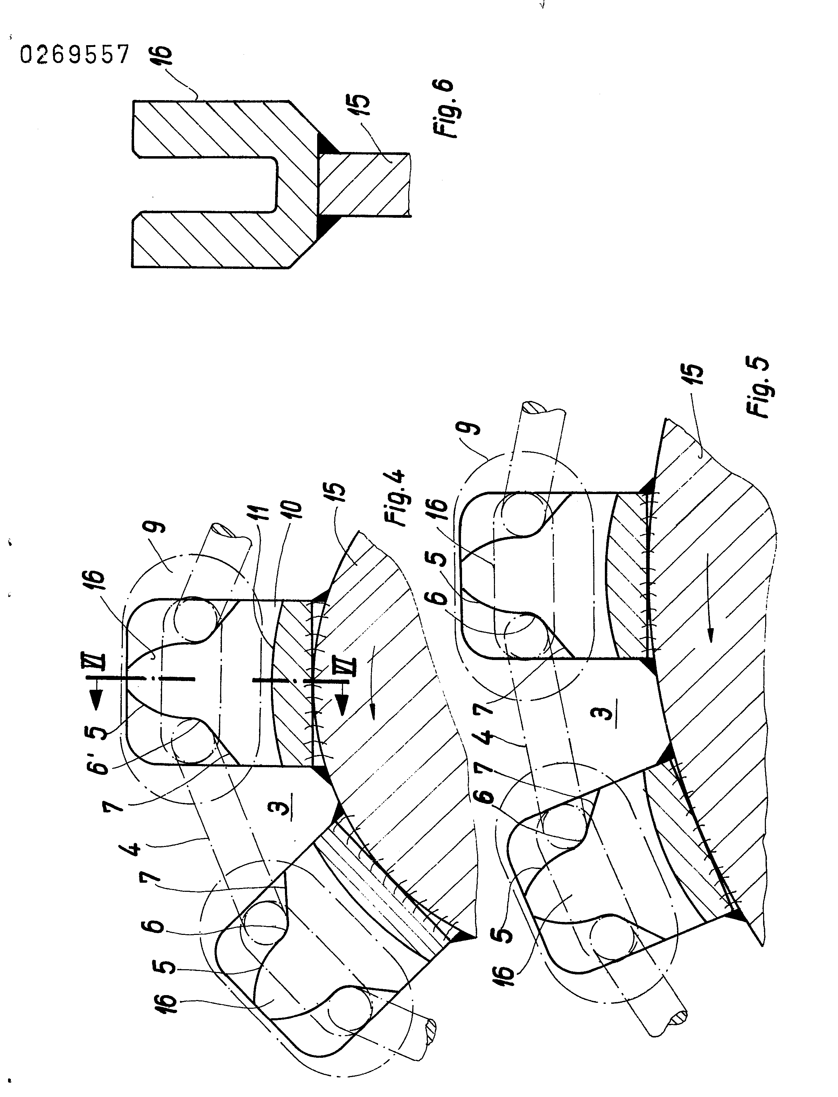

In den Fig. 4 - 6 sind zwei Kettenräder mit auf einem Grundkörper 15 aufgeschweißten Zähnen dargestellt. Bei beiden Kettenrädern werden die gleichen Zähne 16 verwendet. Dies ist trotz unterschiedlicher Zahnteilungen aufgrund der Schrägflächen 7 möglich.

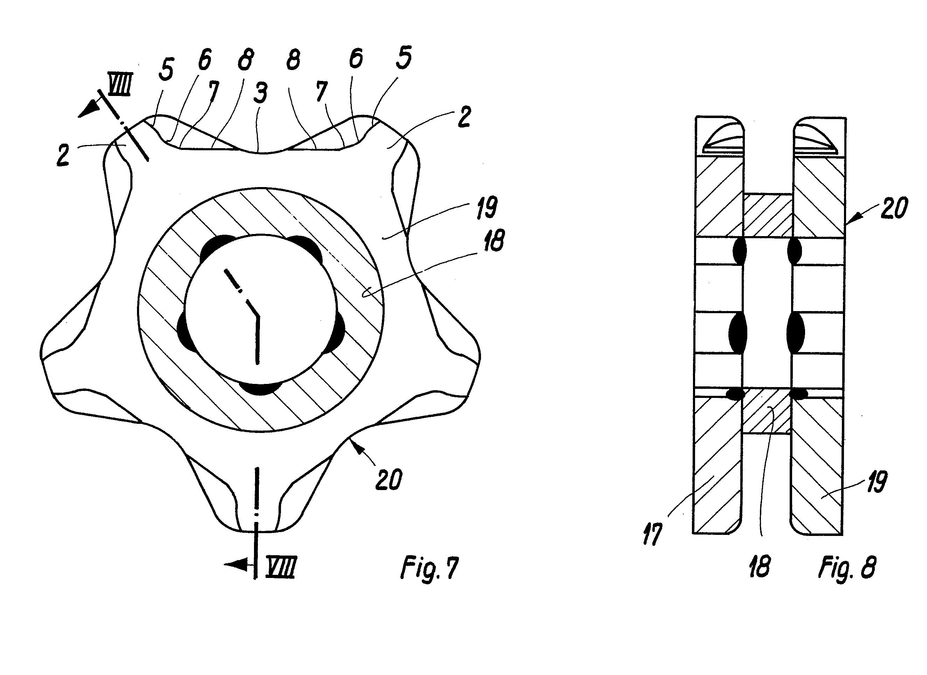

Während der Grundkörper 15 des Kettenrades gemäß den Fig. 4 - 6 aus einem Stück besteht, weist das Kettenrad gemäß den Fig. 7 und 8 einen aus drei durch Schweißen miteinander verbundenen Ringen 17,18,19 gebildeten Grundkörper 20 auf. Die Zähne 2 sind in diesem Fall in die Ringe 17 und 19 eingefräst.

**Patentansprüche**

1. Kettenrad mit zur Aufnahme der Horizontalglieder einer Rundstahlkette dienenden Taschen, die die Horizontalglieder nur partiell abstützen und von jeweils vier Zähnen gebildet werden, deren Flanken einen konvexen Kopfteil und einen sich hieren anschließenden konkaven Fußteil mit einer Zahnfußrundung aufweisen, deren Krümmungsradius im wesentlichen gleich der halben Dicke der Kettenglieder ist, sowie mit einer zur Aufnahme der Vertikalglieder dienenden, die Taschen in jeweils zwei Hälften unterteilenden umlaufenden Rille, dadurch **gekennzeichnet,** daß sich an die unteren Enden der Zahnfußrundungen (6) der in Umfangsrichtung des Kettenrades aufeinenderfolgenden Zähne (2;16) einer jeden Kettentasche (3) zum Radinnern abfallende, einen Winkel ($\alpha$) zueinander einnehmende Schrägflächen (7) anschließen.

2. Kettenrad nach Anspruch 1, dadurch **gekennzeichnet,** daß die Schrägflächen (7) die Horizontalglieder (4) im Abstand von den Böden (8) der Taschen (3) halten.

3. Kettenrad nach Anspruch 1 oder 2, dadurch **gekennzeichnet,** daß die jeweils aufeinanderfolgenden Schrägflächen (7) einer Kettentasche (3) einen Winkel ($\alpha$) von 120° bis 150° zueinander einnehmen.

4. Kettenrad nach einem der Ansprüche 1 bis 3, dadurch **gekennzeichnet,** daß der Grund (13) der umlaufenden Rille (12) mit Stützmulden (14) zur Abstützung der Vertikalglieder (9) versehen ist.

5. Kettenrad nach einem der Ansprüche 1 bis 4, dadurch **gekennzeichnet,** daß die Zähne (16) an einen Grundkörper (15) des Kettenrades geschweißt sind.

6. Kettenrad nach einem der Ansprüche 1 bis 5, dadurch **gekennzeichnet,** daß zwei die Zähne (2) des Kettenrades aufweisende Ringe (17,19) und ein dazwischen angeordneter, die Nut bildender Ring (18) miteinander verschweißt sind.

7. Kettenrad nach einem der Ansprüche 1 bis 6, dadurch **gekennzeichnet,** daß die Schrägflächen (7) gerade sind.

0269557

Fig.1

Fig. 2

0269557

Fig. 3

Fig. 4

Fig. 5

Fig. 6

Fig. 7

18    Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-1 198 473 (COAL INDUSTRY) <br> * Seite 2, Zeilen 11-27; Figur 1 * <br> --- | 1,2,4 | F 16 H 55/30 |
| Y | DE-B-2 856 099 (KLÖCKNER-WERKE) <br> * Spalte 4, Zeilen 10-24; Anspruch 1; Figuren 2,5 * <br> --- | 1,2,4 | |
| A | FR-A-1 584 290 (SOC. STEPHANOISE) <br> * Seite 2, Zeilen 16-30; Figur 3 * <br> ----- | 6 | |

RECHERCHIERTE
SACHGEBIETE (Int. Cl.4)

F 16 H 55/00
B 66 D 1/00

Der vorliegende Recherchenbericht wurde für alle Patentansprüche erstellt

| Recherchenort | Abschlußdatum der Recherche | Prüfer |
|---|---|---|
| BERLIN | 19-02-1988 | GERTIG I. |